# EUROPEAN PATENT APPLICATION

(11) **EP 2 784 730 A1**
(43) Date of publication of application: **01.10.2014**
(21) Application number: 13382112.4
(22) Date of filing: 27.03.2013
(51) Int. Cl.: G06Q 10/06, G06Q 50/12

(54) **Method, system, and interactive software product for management and coordination of guests at social, institutional and company events**

(71) Applicant: Baluarate Eventos, S.L., 30120 El Palmar (Murcia) (ES)
(72) Inventor: Garrigós Sánchez, Luz María, 30120 El Palmar (Murcia) (ES)
(74) Representative: Temino Ceniceros, Ignacio

(57) **Abstract**

Interactive method for the management and coordination of guests at social, institutional and company events comprising the steps of guest registration and registration of attendees, these are the confirmed guests; characterized by the steps comprising: automatic distribution of attendees in resources, while those resources are defined in a three-dimensional graphic shown to the user where: the distribution is carried out according to the levels of closeness or affinity among the attendees; and once the automatic distribution is done it establishes that resources have not been occupied by another attendee. The method further comprising the step of the automatic reorganization of attendees with each new confirmation, according to the proximity or affinity between them.

## Description

The object of the present invention is a method, a system and a computer product applicable to smart mobile phones to optimize the coordination and placement of people attending all types of events: social, institutional and company, that will have a massive influx of participants, and that requires their prior confirmation of attendance. An object of the invention is to improve planning and costs associated with event logistics.

### State of the art

Large social occasions such as weddings, private parties and institutional or corporate events often have planning and logistics problems related to the event that need to be resolved by the organizers. The key issues are:
i. Where do you place the guests?
ii. How many guests will actually attend the event?

These two issues are closely interrelated insomuch as placement and confirmation of the attendees cause, in general, the following technical problems:
(a) Time loss:
   (a) During the organization.
   (b) During the actual event, since it is at that point where attendees have to be placed, and if their positions (table / seat) are not easily located the ensuing delays can detrimentally affect the event itself.
(b) High logistics costs: uncertainty of attendance (in the number of attendees) usually causes an over sizing of the facilities necessary for an aforementioned event, as well as other resources for its implementation, thereby increasing the associated costs.

The document US2010017714 describes a device aimed at companies and organizers who arrange parties or events. Therefore, it is an application that allows an organizer to share information about an event, such as:
- Multimedia Files (event-related music and video) foods that will be on the menu, and create a guest list that allows guests to make comments and interact with the organizer and the rest of guests in the group (as if it were a kind of social network). The host organizes the information by category (for example, music, food, etc.) you can also search, select, organize and update the media content of both the organizer and of the guests. Guests collaborate in the search, preview, and can create playlists for the event and share or interchange these with the rest of guests. In addition guests can accept the menu, and may even choose what they are served and assign themselves their food portions. The approach is as a private social network for people attending an event.

The document US2008201196 describes a system that is designed for brides and grooms or organizers of festivals. Consisting of small applications it allows the creation of guest lists, seating management, scheduling, selection of suppliers, budget control and monitoring of gifts. It focuses especially on weddings. In the system the bride and groom and users introduce and manipulate the information relating to the fields specified above. Each event has a unique website with this information, it also contains information of the bride and groom. This system includes a coordinated seating plan, similar to the portals of Bodaclick weddings:
(http://www.bodaclick.com) and bodas.net (http://www.bodas.net).

In this point it is considered that there are no coincidences with the present invention and that of the first document, which proposes a social network to liven up the organization of an event (i.e. a group of people select music, food, and comment in a private network on things relating to the event), and the second will be a website that offers the happy couple a way of coordinating all aspects and things to keep in mind for their celebration.

On one hand, the US2006271381 document describes an approach to C2C *(consumer to consumer* http://en.wikipedia.org/wiki/Consumer-to-consumer). It is a solution designed and focused exclusively for weddings. For the brides control part, the approach is very much "Do It Yourself" oriented and is a solution for individuals, and not for event locations. The solution is more focused on the administrative management of the wedding, defined as a time planner for a succession of items and their related details: tasks, checklists, schedules, budgets, chat, invitation, printing of invitations, etc. In any case, it refers to a visual graphic representation of the scenario of the wedding. All supported functions are therefore understood within a textual interface.

On the other hand, the document US20080133286 describes a system with a combined approach: a model of B2B (Business to Business) httg://en.wikipedia.org/Wiki/Business-to-business) between the owner and the advertisers and a B2CB2B between them and the final buyer. This system is designed as a service mode platform from which organizers seeks, compare and contract the services offered by suppliers. Other features are that it can operate as a comparator since users have several for hire options. In addition, you can include the organization and planning of all types of events, not just weddings. However, there is no evidence of a visual representation in 3D of the scenario of the event. This document is intended as a system that allows a number of service companies to bid to capture organizers of events as clients, who may be either companies or individuals.

### Description of the invention

The interactive method for the management and coordination of guests at social, institutional and company events is intended as a tool that allows the organizers of an event to know, in real time, the number of attendees, details and the changes that arise in the event. Therefore, it must be possible for organizers to customize the aforementioned event space and coordinated and place the arriving guests in the most quick, simple, and effective way possible.

In addition, the method has to be interactive to facilitate the aforementioned organization. Therefore the method develops as a computer product with a set of executable instructions on a computer and or a mobile communication (mobile phone, PDA, Tablet) device, connected to a communication type Internet network, so that its use is entirely online and with ability to make changes up to 24 hours prior to the event and without geographical limitation.

The invention is based on a mobile application where the organizer has the ability to send an invitation text type message (SMS or another IP-based) to the contacts on their own phone, facilitating the easy selection of those contacts you want to send the invitation to.

Said message will include the place, date, time and location of the event, in addition a confirmation link that forwards the response to a central server, accessible via the website, and allows the organizer, that is, the user who has discharged the event and who has sent the invitation to their contacts, to organize and modify positions interactively and in real time.

To do this, the server will have a 3D environment of the installations comprising at least:
(i) The definition of the physical location of the event, in m2, showing a usefully sized interactive map with the guest area, private areas, and the general physical characteristics of the location.
(ii) Definition of the resources available for the event, location, and maximum and minimum attendee resources.

This server will run a method comprising the steps of:
(a) Registry of guests.
(b) Attendees - this is the confirmed guests.
(c) Automatic distribution of attendees resources, where
   a. The distribution is done on the basis of the levels of proximity or affinity among participants; and
   b. Once the automatic distribution has been realized it establishes that resources have not been occupied by another attendee.
(c) Automatic reorganization of attendees with each new confirmation according to their proximity or affinity.

In addition, the automatic distribution of attendees can be manually adjusted by the organizer.
Throughout the description and claims the word "includes" and its variants are not meant to exclude other technical features, additives, components or steps. For experts in the field, other objects, advantages and features of the invention, separate in part from the description and in part of the practice of the invention. The following examples and pictures are provided for illustration, and it is not intended that they restrict the present invention. In addition, the present invention covers all possible combinations of the particular ends and preferences indicated herein.

### Brief description of the figures

The following describes a series of drawings that will help you better understand the invention and which are expressly related to a carrying out of the invention which is presented as a brief and not limited example thereof.
FIG 1.- Shows a scheme of the portable electronic device that implements the invention.
FIG 2.- Shows the architectural diagram of a computer system that illustrates the architecture of a server used in different practical performances of the invention.
FIG 3.- Shows the diagram of the architectural network that shows an illustrative operating environment for the different practical performances of the invention.
FIG 4.- Shows a system diagram, object of the present invention.
FIG 5.- Shows an administration area diagram of the (1) system, object of the present invention.
FIG 6.- Shows an image of the graphical interface of restaurants that is part of the invention.
FIG 7.- Shows different screens of the options of the new room, rooms and events (4061 g) shown in

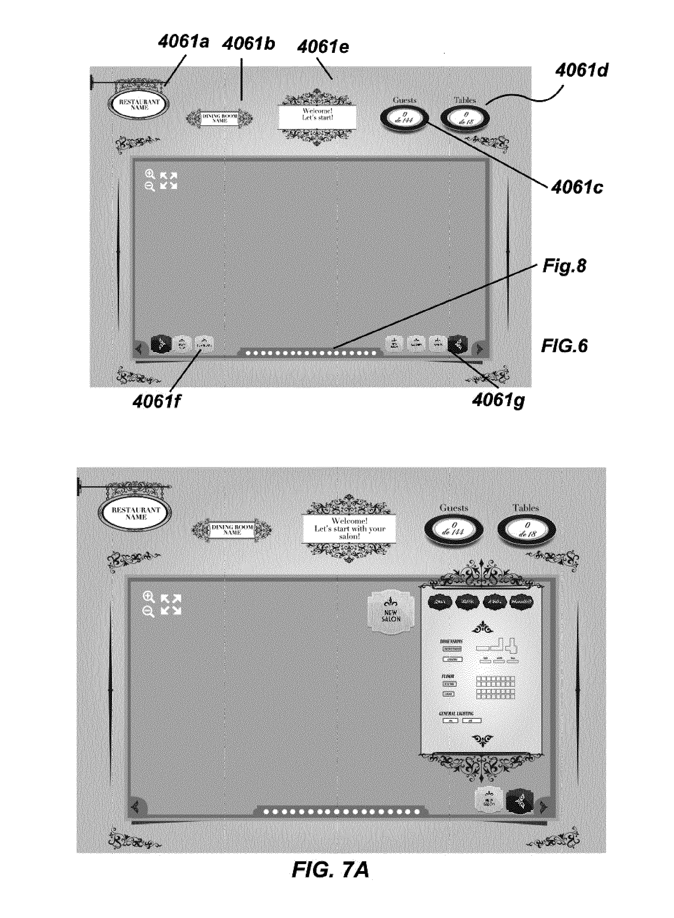

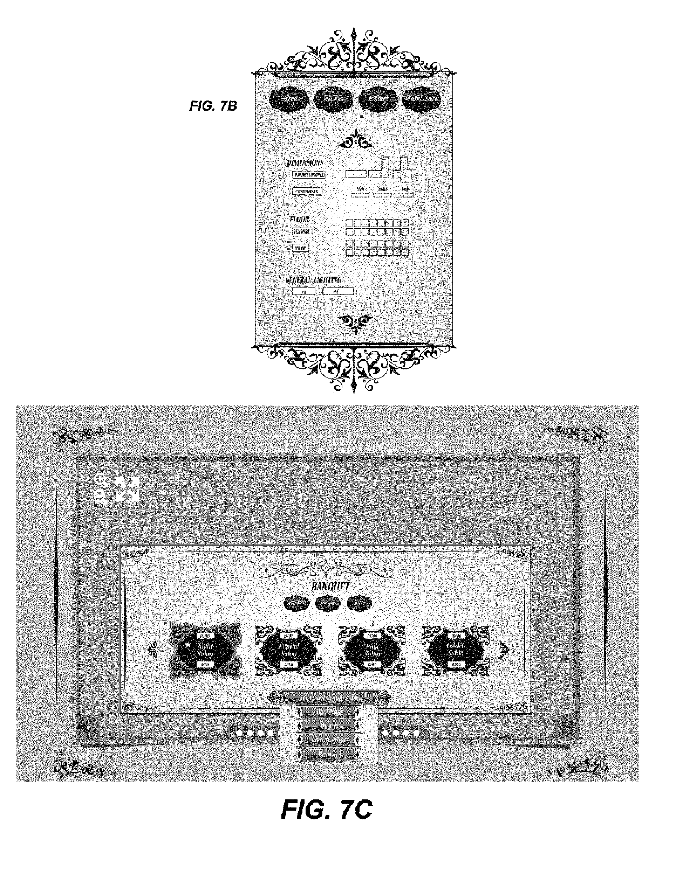

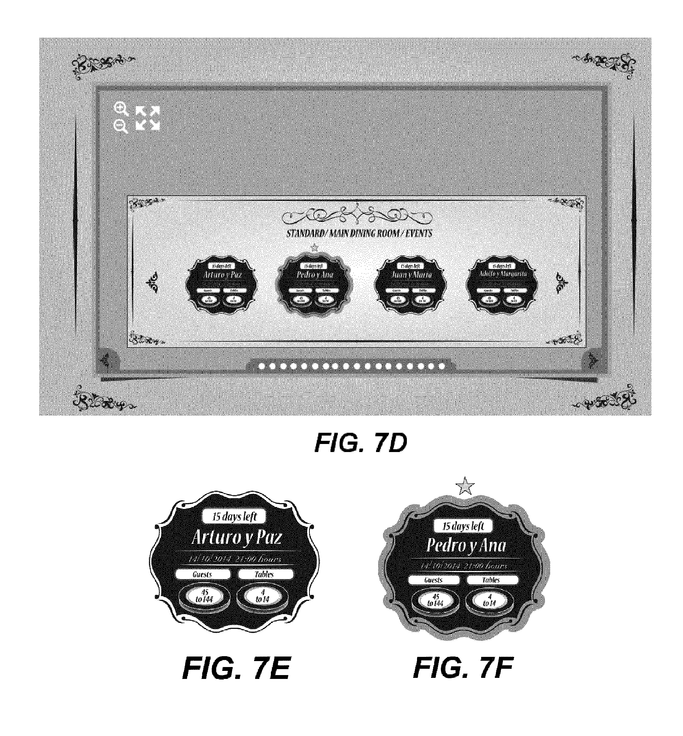

Figure 6, including new room (fig.7A), menu customization (fig.7b), To access rooms activate rooms menu (Fig. 7c), active events in each room (fig.7D), , the number of placed guests of the total and (fig.
7E) wherein if an event appears with a star, it means that there have been changes within this event (fig.7F).

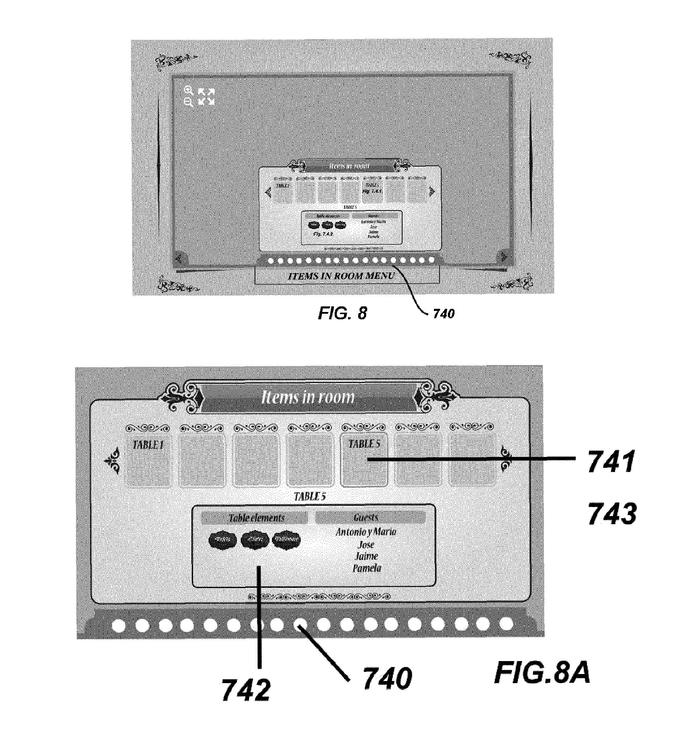

FIG 8.- Shows the different screen menus of the room items shown in the Figure 6 graphical interface.

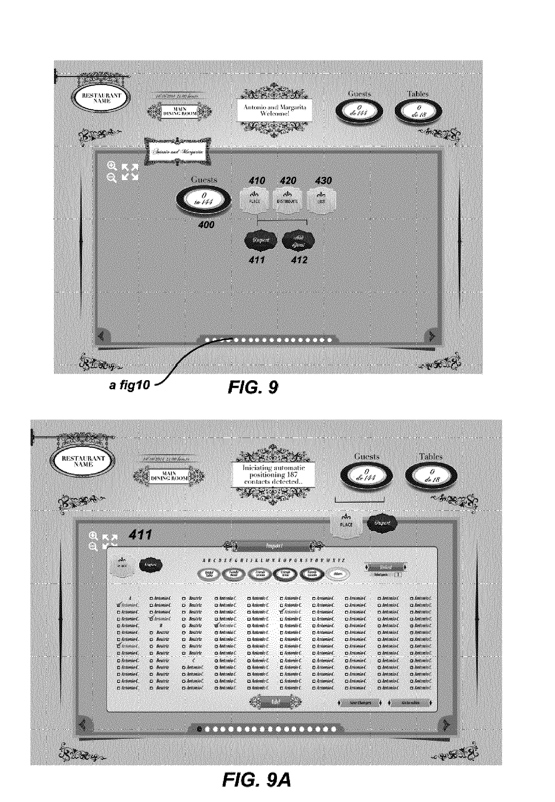

FIG 9 - Shows the screen with the graphics area of guests (4062) and at the top including figs. 9A (registering guests) and fig. 9B (add contact).

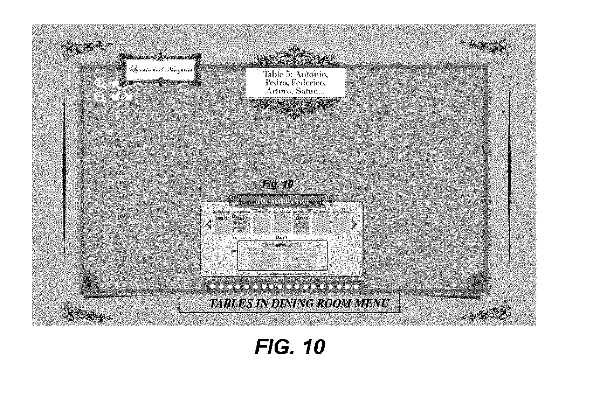

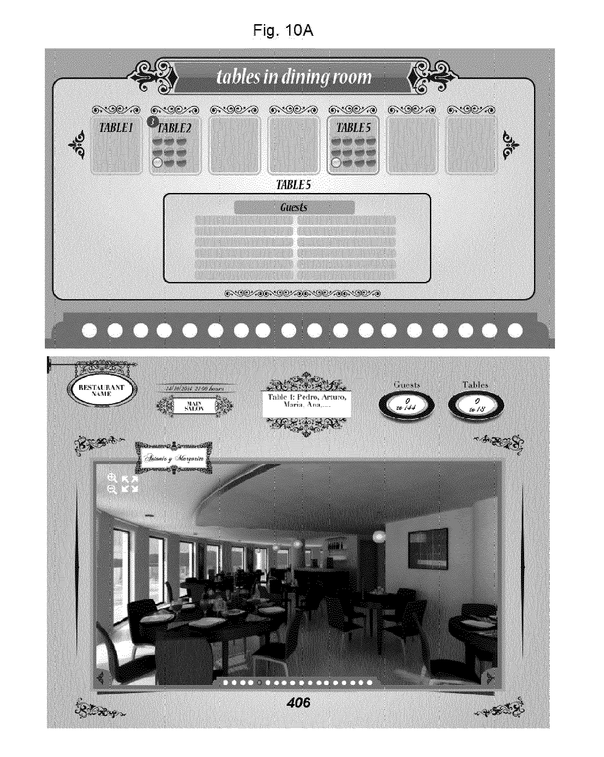

FIG 10 - Shows the room menu scenario wherein if we access a table in the scenario, above (fig. 10A) indicates the name of the table.

### Detailed display of carrying out the invention

The object of the present invention is a method, a system and a computer interactive product, developed in 3D environments for placement and confirmation of diners at a banquet for any type of event: wedding, social, institutional and company. The system is developed in 3D environments where it interacts with users and databases in real time. It is applicable to any mobile device (100) including laptops, tablet notebooks, and smart phones. This application is intended for restaurants, organizers and planners of weddings. With this system it is possible to customize spaces, enable session organizers to put the guests in real space and instantly know the details without any need for calls or movement.

The main innovations which the system brings reside in:
1) Customize the actual space where the event will be held through a 3D environmental computer system with tools to virtually recreate the scenario. It allows you to recreate the space (dimensions, walls, floor, doors, windows and lighting), tables (number or name of table, type, shape, finish and number of guests), chairs (type, shape, finish), linen and cutlery.
(2) Once the room is customized in a 3D environment, organizers will have access to this space by means of username and password provided by the restaurant, and places the guests automatically by a program set up on your mobile (100) device connected to the system core. This application allows your mobile to convert contacts to guests, assign them to groups (family, friends, worker companions, etc.), specify the number of people linked to each guest (this novelty is very important since organizers will not have available all the guest contacts e.g. the partners of work companions) and place them on the corresponding tables.
(3) In addition each guest will receive a text message with an invitation to the celebration and you can confirm their attendance by returning this last piece of information to the system. The confirmation is instantly made effective in the 3D scenario and becomes a confirmed diner in room. This data is also collected in the restaurant area, with the diner's name, and their seat and table in the room.
(4) Finally these data instantly return to the system updating the room changes in the server.

The object of the invention is to provide a solution to a real problem that exists in events and responds to two questions:
(a) Where the guests are placed?
(b) How many guests will attend the event?

The origin of this problem lies at the celebration banquet. Placement and confirmation of guests at an event causes: loss of time for organizers, high costs of management, as it is not computerized and, occasionally, uncertainty and loss of money due to the lack of knowledge regarding the confirmation of attendance.

If we take into account that a banquet is about an average of 57-59% of the cost of a celebration and that placement and confirmation of guests is one of the most important efforts at a banquet, the proposed solution is to provide added value in the market of celebrations.

In the wake of this problem in the market, the system of the invention improves the service for restaurants and wedding-planners and they will be able offer their customers to manage the placement of guests online through a virtual recreation of 3D real space where the banquet will be held. This implies computerized management through a 3D graphics engine environment and the development of an application to place guests in a few minutes when, until now, this has been a textual process. This system is a new service for the operational organization of a celebration and for its development in 3D environments. It saves time for organizers, decreases the costs of management of guests for banquet reservations; it reduces uncertainty and economic losses generated by the lack of knowledge regarding the confirmation of attendance.

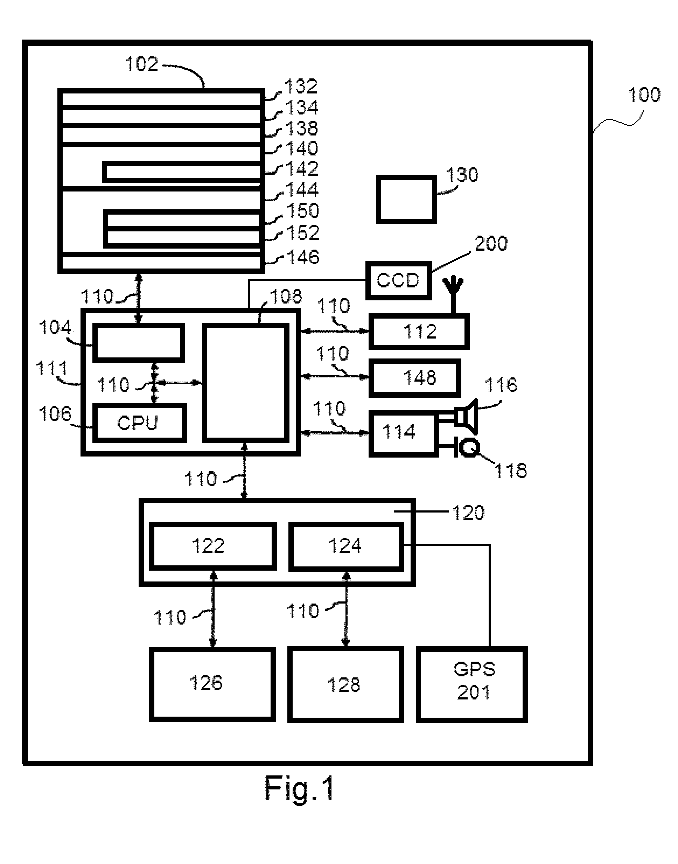

The present invention is implemented in a portable electronic device 100 which can be selected among computers, tablets and mobile phones; though a choice for a mobile device architecture is shown in Figure 1. In general, any programmable communications device can be configured as a device for the present invention.

Figure 1 illustrates a portable electronic device, according to some performances of the invention. The 100 electronic portable device of the invention includes a memory 102, a 104 memory controller, one or more 106 processing units (CPU), a 108 peripheral interface, a 112 circuits system of RF, a 114 audio system, a 116 speaker, 118 microphone circuits, i/o (IO) subsystem 120, a 126 touch screen, 128 input or control and an external port for 148 appliances. These components communicate over one or more 110 signals communication buses or lines. The 100 device can be any portable electronic device, including, though not in a limited sense, a laptop, a tablet, a cell phone, a media player, a personal digital assistant (PDA), or similar, including a combination of two or more of these items. You must appreciate that device 100 is just one example of a 100 electronic portable device and the device 100 can have more or fewer components than those shown, or a different component configuration. The components shown in Figure 1 can be implemented in hardware, software or a combination of both, including one or more application-specific integrated circuits and or signal processing. In the same way, the 126 screen is defined as touch, although a standard screen can be used.

The102 memory may include a high-speed random access memory and can also include non-volatile memory, such as one or more storage devices in a magnetic disk, flash memory devices or other non-volatile solid state memory devices. In some performances, the 102 memory can include in addition a storage located remotely on one or more processors 106, for example storage connected to a network that is accessed through the system 112 of circuits RF or the external port 148 and a network of communications (not shown) such as Internet, intranet (s), local area (LAN) networks, extended local area networks (WLAN), area network (SAN) storage and others, or any appropriate combination. Access to the 102 memory by other components of a device 100, such as the CPU 106 and 108 interface peripherals, can be controlled via the 104 memory controller.

The108 peripheral interface connects the peripheral input and output of the device to the 106 CPU and memory 102. One or more 106 processors execute different software programs and or sets of instructions stored in memory 102 to perform different functions of your 100 and for data processing.

With some executions the 108 peripheral interface, the 106 CPU and memory controller 104 can be implemented on a single chip, such as a 111 chip. In some other executions, they can be implemented on various chips.

The system of 112 circuits RF (radio frequency) receives and sends electromagnetic waves. The system of 112 RF circuits converts electrical signals into electromagnetic waves and vice versa and communicates with communications networks and other devices for communication via electromagnetic waves. The 112 system RF circuits may include circuitry widely known to perform these functions, including though not in a limited sense, one a set of antenna, RF transceiver, one or more amplifiers, tuner, one or more oscillators, a processor of digital signals, a set of CODEC chips, subscriber identity module (SIM) card, memory, etc. The 112 system of RF circuits can communicate with networks such as Internet, also known as World Wide Web (WWW), one Intranet and or a wireless network, such as a cellular telephone network, local area networking (LAN) and or (MAN) metropolitan area and with other devices using wireless communication networking. Wireless communication can be used either from a plurality of standards, protocols, and technologies, including, though not in a limited sense, the global system for mobile communications (GSM), the GSM environment enhanced data (EDGE), the multiple access by division of broadband (W-CDMA), the (CDMA) code division multiple access, time division multiple access (TDMA), Bluetooth, wireless (Wi-Fi) (e.g., IEEE 802. 11a, IEEE 802. 11b, IEEE 802.11 g and or IEEE 802. 11n), voice over protocol IP (VoIP), Wi-MAX, a protocol for email, instant messaging service of short messages (SMS) or any other suitable communication protocol, including communication protocols not yet developed at the time of submission of this document.

The audio circuits system 114, the 116 speaker and the 118 microphone provide audio between a user and a 100 device interface. 114 audio circuits system receives audio data from the 108 interface peripherals, converts the audio data into an electrical signal and transmits the electrical signal to the 116 loudspeaker. The speaker converts the electric signal into audible sound waves for the human being. The audio 114 circuits system also receives electric signals converted from sound waves by the 116 microphone. 114 audio circuits system converts the electric signal into audio data and transmits the audio data to the 108 peripheral interface for processing. The audio data can be recovered and or transmitted to the 102 memory and or system 112 of RF circuits by the 108 interface of peripherals. In some implementations, the114 audio circuits system also includes a headphone connection (not shown). Headset connection provides an interface between the 114 system of removable audio in/out peripherals, such as headphone output-only or a handset as both output (headphone to one or both ears) and as input (microphone).

The 120 subsystem of I/O provides the interface between in/out peripherals of the 100 device, such as touch screen 126 and other input/control 128 devices, and the 108 peripheral interface. The 120 I/O subsystem includes a 122 touch screen controller and one or more 124 input controllers for other input or control devices. This or the 124 input controllers receive (n)/send(n) electric signals from/to other 128 input or control devices. Other 128 input/control devices may include physical buttons (e.g. push buttons, toggle buttons, etc.), dials, slide switches, and or 201 average geographical location such as GPS or equivalent.

The 126 Touch screen in this practical implementation provides both an output interface and a gateway between the device and a user interface. 122 touch screen controller receives/sends electrical signals from/to the126 touch screen. 126 touch screen displays the visual output to the user. The visual output can include text, graphics, video, and any combination. Part or all of the visual output can correspond to objects of user interface, additional details are as described later.

126 touch screen also accepts user inputs based in the haptic contact or touch. The 126 touch screen is sensitive to surface contact that accepts user input. 126 touch screen and touch screen controller 122 (along with any associated module sets of instructions in memory 102) detects contact (and any movement or loss of contact) on the 126 touch screen and converts the detected contact in interaction with the objects in the user interface, such as one or more softkeys that are displayed on the touch screen. In a performance by way of example, a point of contact between the 126 touch screen and the user corresponds to one or more fingers of the user. The 126 touch screen can use LCD (liquid crystal display) technology or LPD (light emitting polymer display) technology, although other screen technologies can be used in other implementations. The 126 touch screen and touch screen controller 122 can detect contact and any movement or lack thereof using any of a variety of technologies of sensitivity of contact, including, though not in a limited sense, capacitive, resistive, technologies of infrared and acoustic surface waves, as well as other provisions of proximity sensors or other elements to determine one or more points of contact with the 126 touch screen.

The 100 device also includes a 130 power system to feed the different components. The 130 feeding system may include a set of one or more power supplies (e.g. batteries, alternating current (AC)), a rechargeable system, a power converter or inverter fault detection circuit, an indicator of the state of energy (for example, a (LED) light emitting diode) and any other component associated with the generation, power management and distribution of power in portable devices.

Software components included a 132 operating system, a module in some implementations, 134 (or set of instructions) communication, a 138 module (or set of instructions) of contact/movement, a graphic module 140 (or set of instructions), a 144 module (or set of instructions) of the state of the user interface and one or more 146 applications (or set of instructions).

The 132 operating system (for example, Darwin, RTXC, LINUX, UNIX, OS X, WINDOWS, or an embedded operating system), includes different components of software and or drivers to control and manage the general tasks of the system (for example, memory management, control of storage devices, energy management, etc.) and facilitates communication between the various components of the hardware and software.

Communication module 134 facilitates communication with other devices through one or more 148 external ports and also includes different software components to manage data received by the 112 system of RF circuits and or the external port 148. The external 148 port (for example, a universal serial bus (USB), FIREWIRE, etc.) is adapted to connect directly to other devices or indirectly through a network (e.g., Internet, wireless LAN, etc.).

The 138 contact/movement module detects contact with the 126 touch screen, along with the122 touch screen controller. The 138 contact/movement module includes different software components to perform different operations related to the detection of contact with the 126 touch screen, such as determine if contact has occurred, determine whether there is movement of the contact and track movement through the touch screen, and determine if contact is interrupted (i.e. if the contact has ceased). The determination of the movement of the point of contact may include determining the speed (magnitude), velocity (magnitude and direction) and or the acceleration (including magnitude and direction) contact point. In some implementations, 126 contact / movement module and the122 touch screen driver also detect contact on the touch pad.

The 140 graphics module includes different components of software known to show and display graphics on the 126 touch screen. Note that the graphic term includes anything that can be shown to a user, including, although not in a limited sense, text, Web pages, icons (such as objects of user interface including softkeys), digital images, videos, animations and similar.

In some implementations, the 140 graphics module includes a 142 optical intensity module. Optical intensity 142 module controls the optical intensity of graphical objects, such as user interface objects, shown in the 126 touch screen. The optical intensity control may include the increase or decrease of the optical intensity of a graphic object. In some projects, the increase or decrease can follow default features.

The 144 state user interface module monitors the status of the user interface of the device 100. The 144 state user interface module can include the blocking module 150 and the 152 release module. Lock module detects the satisfaction of any one or more conditions to carry out the transition from the 100 device to a locked state of the user interface and to make the transition of the 100 device to the locked state. Unlock module detects the satisfaction of any one or more conditions to make the transition from the device to an unlocked state of the user interface and make the transition from the 100 device to the unlocked state.

The application or applications 130 can include any application installed on the device 100, including, though not in a limited sense, a browser, an address book, a list of contacts, email, instant messaging, word processing, emulated keyboard, graphical objects, JAVA applications, encryption, digital rights management, voice recognition voice replication, positioning capability (such as the provided by the positioning system global (GPS)) a music player (which plays recorded music stored in one or more files, such as MP3 or AAC files), etc.

In some implementations, the 100 device may include one or more optional optical sensors (not shown), such as 200 CCD or CMOS image sensors, for use in imaging applications.

However, the indicated structure of hardware is just one possibility and you should take into account that the 100 device may include other elements of image capture such as a camera, scanner, laser marker, or combination of any of these types of devices, which can provide the representation of the actual environment in video format to your mobile device sequence of images, vector format or any combination of the above formats.

Similarly, the 100 device may include geographical location devices based on networks of GPS positioning, geographic location support devices based on GPS satellites and IP internet networks localization - AGPS-, location devices based on the triangulation of radio signals provided by WIFI antennas and Bluetooth ® (ISSP) or the combination of any of these mentioned devices or any device which sends the numerical data of its geographical location to your mobile device.

The device 100 can include any type of element capable of representing images in real time with a minimum of 24 FPS (Frames Per Second, image per second) as, TFT screens, TFT-LED, TFT-OLED, TFT-Retina, the combination of any of the above, as well as new generation Holo-TFT displays, transparent and Micro-Projectors or any graphic representation that can provide the 100 mobile device a way to represent visual contents to the user.

The 100 device includes a processor or set of processors which by themselves or in combination with graphics processors such as GPU (Graphics Processing Unit) and APU (Accelerated Processing Unit) can provide the 100 mobile device the ability to represent, in actual run time, vector graphics, and to form polygons textured with these, through libraries of vector representation (sets of standardized procedures for cross-platform graphical representation) like OpenGL, DirectX or any type of libraries intended for this purpose.

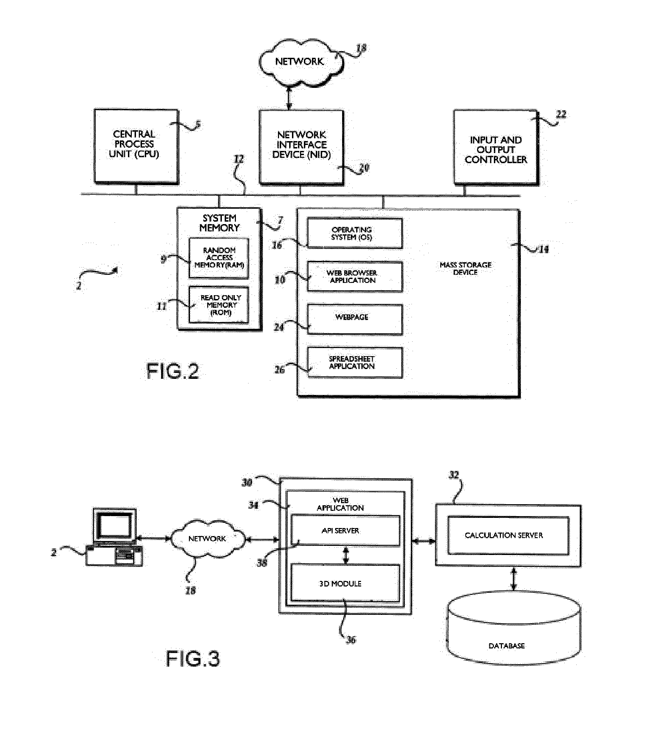

With reference to figures 2 and 3 and the corresponding description is intended to provide a brief, general description of a suitable computing environment (a server and a personal computer) in which the forms of running the invention can be implemented. Although the invention can be described within the general context of modules of a program that runs on a server and 100 mobile computer systems, experts in the field will warn that the invention can, likewise, be implemented in combination with other types of computer systems and program modules.

In general terms, program modules include routines, programs, components, data structures and other types of structures that carry out specific tasks or implement specific abstract data types. The invention can, likewise, be practiced in distributed computing environments in which the tasks are carried out by remote processing devices that are linked through a communications network. In a distributed computing environment, program modules can be located both in local and remote memory storage devices. Referring now to figure 2 it describes the architecture illustrative of a computer 2 used in various forms of implementation of the invention. The architecture of computer, shown in Figure 2 illustrates a desktop computer or conventional laptop and which can also be used as a server, which includes a 5 central processing unit (CPU), a memory system, which includes a 9 random access (RAM) memory and a memory read-only (ROM) 7 11, and a bus 12 system that attaches the memory to the CPU 5. A basic input output system that contains basic routines that help to transfer information between the items on your computer, for example during startup, is stored in ROM 11. Computer 2 also includes a 14 mass storage device to store operating system 16, programs of application and other modules of the program, which will be described in greater detail in the following lines.

The 14 mass storage device is connected to the CPU 5 using a mass storage (not shown) connected to the 12 bus driver. Massive storage 14 and its associated computer readable media device provide non-volatile storage to computer 2. Although the description of computer readable media contained in the present report refers to a mass storage device, such as a hard disk or a CD-ROM drive, you must appreciate that, to experts in the field, computer readable media can be any means that may be accessed via the computer 2.

By way of example, and not limitation, computer readable media can comprise computer storage media and means of communication. Computer storage media include a volatile and non volatile, removable and non-removable implemented in any procedure or technique for storage, as for example legible instructions for computer, data structures, and modules of programs or other data. Computer storage media include, but are not limited to, the memories RAM, ROM, EPROM, EEPROM, flash memory, or other techniques of solid-state memory, CD-ROM, digital versatile disk (DVD) or other optical storage devices, magnetic cassettes, magnetic tapes, floppy-disk storage devices or other magnetic storage devices or any other means that can be used to store the desired information and which may be accessed via the computer 2.

According to various forms of implementation of the invention, the computer 2 can operate in an environment of networking using logical connections with remote computers via a network 18, for example Internet connections. Computer 2 can connect to the network 18 through a unit 20 interface with the network connected to the bus 12. You should appreciate that the network 20 interface unit can, likewise, be used to connect to other types of networks and remote systems. Computer 2 can also include a controller 22 input output for receiving and processing an input from a plurality of other devices, including a keyboard, electronic punch (not shown in Figure 2). Similarly, a 22 input output handler can provide output to a display screen, a printer, or other output device.

As noted briefly in the previous lines, a plurality of modules of program and data files can be stored in the mass storage device 14 and in the 9 RAM of the computer 2, including operating system 16, appropriate for the control of the operation of the personal computer connected to the network, such as for example the operating system MICROSOFT CORPORATION ® WINDOWS ®. Mass storage device 14 and RAM 9 can also store one or more modules of program. In particular, mass storage device 14 and 9 RAM can store a program 10 Web browser application. As known by experts in the field, the 10 Web browser program operates to request, receive, reproduce and provide interactivity with electronic documents, as for example a Web page 24 which has been formatted using HTML. Likewise, the 10 Web browser application program can operate to execute directives contained in the Web page 24, as for example directives using the language JAVASCRIPT by SUN MICROSYSTEMS, INC. In accordance with a form of implementation of the invention, 10 Web browser application includes the application of MICROSFOT CORPORATION Web INTERNET EXPLORER browser program. It must be appreciated, however, that other programs from a third-party Web browser application can be used to realize the various aspects of the present invention, as for example the FIREFOX from MOZILLA FOUNDATION browser application.

In particular, the Web page 24 may include an HTML and directives which, when they are represented by the implementation 10 of the Web browser, provide a visual representation of a program or programs stored on the 2 computer acting as a server 30. Likewise, the directives included in the Web page 24 allow a computer user to interact with the representation provided by the Web browser application 10 and modify the application 10.

Now, referring to figure 3, a diagram of a network architecture that illustrates an operating environment for the different forms of implementation of the invention shall be described. As shown in Figure 3, the 2 computer is connected to a network 18. A 30 application server is also connected to the network 18. The 30 application server includes a computer from the server which can contain any or all of the conventional software components described previously with respect to figure 1. Likewise, the 30 application server is operating to run an application on the Web server to receive and respond to requests related to documents stored on or accessible to the 30 application server. Likewise, the 30 application server is operational to receive and respond to requests relating to pages generated by a Web 34 application. You must appreciate that the Web 34 application can comprehend an executable code on the server applications, to communicate with other computers, executable code 30 and may include files, templates, graphics, audio and other content known to experts in the field.

In accordance with another aspect of the invention the application Web 34 is operational to provide an interface with a computer 2 user to interact with the worksheet or workbook accessible via the network 18. In particular, the Web 34 application uses a programming of applications (API) interface with the server 38.

As is analyzed in greater detail below, 2 computer can transmit a request to the application server 30 to display the interface of the invention within the context of the Web browser application 10. In response to this request, the Web 34 application communicates to the server 32 a calculation using the API 38 on the server. In particular, Web 34 application automatically requests from server 32 the calculation of distribution among participants in resources, while those resources defined in a three-dimensional graphic are shown to the user through the 36 three-dimensional Web Player where:
(a) The distribution is carried out according to the levels of closeness or affinity among the attendees.
(b) Once the automatic distribution has been realized it then establishes that resources have not been occupied by another attendee.

The 32 calculation server will automatically reorganize the attendees with every new confirmation of attendance received, according to proximity or level of affinity between the attendees.

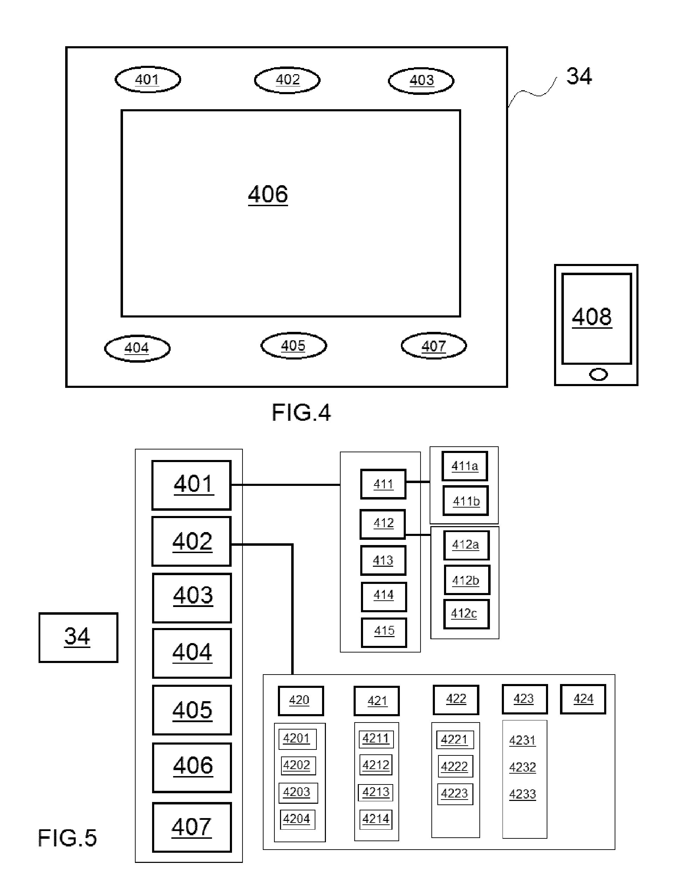

As shown in Figure 4 web application 34 the object of the invention is structured in different levels or user areas, different from each other but at the same time integrated together uniquely, operating and interrelated. The nature and function of each area is determined by the needs and requirements associated to your user type. With individual implementation, planned areas are as follows:
Admin area (401) where one or more users of the company that owns the system have access to a monitor and manage the correct operation of the same, the contents determined as dynamic as well as a purely administrative control of services consumed by each client/user.
   - Area restaurants (402) that is used exclusively for owners of restaurants and celebrations, with the operations necessary for them to self-manage their rooms, and events calendar.
   - Area of organizers (403) that is accessible for professionals in the Organization of events and coordination of resources and guests.
   - Area of bride and groom (404) that it helps them take control and follow-up of their celebration as well as communication tools and interaction with guests that we will see further ahead.
   - Public area (405) which will be freely available to all users, anonymous visitors restricted and characteristic of a traditional web-feature. Generic information and options to establish some kind of contact through inquiry or subscription.
   - Graphical interface in three dimensions (406), a specific module to manage the distribution of rooms, resources and guests at each event. The interface will be fully graphic and will allow in a visual way, to organize resources and guests registered for each event. The interface will be highlighted by its visual appeal and its functionality: intuitive and efficient. The access to this module will be from the registration of an event which will open a new window in your browser within which will display a digital recreation of the scenario of the event and a menu of operations related to its organization and management.
   - Support area (407) which is of exclusive access to the support personnel and help desk for the assistance of users and resolution of technical issues. The segment of clients and events that each operator can access, will be assigned directly by the platform administrator. The support area will be the direct channel of attention through the creation, management, and resolution of support tickets.
   - Guests application (408) is set to Android® Google ® and Apple ® iPhone ® platforms to perform the task of registering guests.

Figure 5 shows a more detailed functional diagram of the web application 34 shown in Figure 4.

In the area of administration (401) the user profile is for website administrators whose main function is the management of dynamic content and administrative control of accounts. This area of management (401) comprises several modules (411-415) as outlined below.

The first registry module 411 includes a list with all clients of the system. Clients can be of two types, restaurants 411 or organizers 411 b. Each of them includes a form with the following information: client, customer, events data code (both consumed as ongoing) and authorized professionals.

Events module 412 specifies the events underway 412a, future 412b and done 412c. This module includes an access in detail for each event (412a - 412c), which include the client code, customer data and events.

The consumption module 413 shows the consumption made by each organizer and or restaurant in a given range of dates. 414 billing module includes invoices listed by date, renewals carried out and those that are planned. Finally the 415 support tickets module is a specific area, with independent access and exclusive use for support staff.

In the 402 restaurants area, the user profile is that of owners and managers of restaurants and its core functionality is the management of the site, clients and events. The interface is presented as text and graphic in three dimensions. It includes various modules and sections that are described below.

The 420 data module includes four sections. The first section of contact details 4201 includes the site profile with its name, logo, situation, phones, email and person or contact persons. The restaurant can edit most file details with others being read only. Another section is that of the password 4202 with user name and password to enter the system. A third section is a copy of invoices 4203 with email address to receive invoices and notifications. Finally, the fourth section includes forms of payment 4204 according to customer preference: card, direct debit or payment gateway with Paypal®.

Consumption and balances 421 module is where the restaurants will have a space dedicated to consult the total contracted resources, recruit new ones and, at the same time, get an economic balance in their account. This module includes a first section to enter credits 4211 which includes options to consume the products of the system. The system does not require any maintenance cost, is only paid for by the consumption of the products offered by the system. The system is offered as three separate products/events: Extra, Standard and Deluxe:
- Standard events: for celebrations in a single room. It allows a restaurant to give access by means of username and password of the event organizers, or the bride and groom in the case of it being a wedding, to place the guests in the room previously customized by the restaurant.
- Extra events: for celebrations with several lounges. Allows identical features as with Standard events but with more rooms, ideal for celebrations with many guests.
- Deluxe events: consists in the re-creation of detailed customized space. We use the following example to clarify this product: the celebration of a wedding in a castle or on a beach. It will develop the entire space in detail, recreate all the spaces, and delimits the banquet area with tables.

Any product includes a bundle of text messages to send to guests (from the area of the graphical user interface) (place, date, and location) event information and invitation confirmation of attendance of guests in the system. Each product has a value in credits, which is why customers will buy credits for an economic amount. Therefore you can buy:
- Credits: The higher the number of credits purchased, less cost per credit.
- Make subscriptions: time and use of credits. It is a service a la carte, where restaurants customize their budget depending on the events they want in the system.
- Buy SMS message credits. For automatic notifications to bride and groom and guests, you can buy a certain number of messages at a price that is preset by the service owner. The available balance of messages will be updated as the bride and groom make use of them.

Available balance section 4212 shows available credit, the refundable balance (the restaurant can recover the balance if they are not satisfied with the system), the bonuses and the balance in SMS messages. The automatic 4213 top-up section provides the option of modifying the contract conditions. The consumption 4213 report section shows with dates, event details x range of dates, details for events and an illustrative graphic on the evolution of events. The consumption section 4214 graphically specifies billing and consumed events. You can also search for specific months and go to your purchase history. This option helps the restaurant to rate their consumption by dates and by detailed information.

The events module 422 includes four sections, new event 4221, rooms 4222, events list, 4223 and graphic event 4224.

In the new event section 4221 you can register, specifying the type of event (Standard, deluxe...), the type of celebration (wedding, baptism, communion, dinner, etc.), date of the event (this detail is important as changes can be made up to 24 hours prior to the event), activation date, the room name, number of guests and the event name e.g. wedding, the names of the bride and groom. Details may include: name, contact telephone, user and password to access the system. These details are very important, since they will be appearing on each event 3D graphic interface.

The 4222 rooms section assigns the event to a room. If the room doesn't exist, it's allowed the option of adding it. In the listing of events section 4223 shows a list of events in progress, completed or future. Each one with its own date, event name, name of room, number of guests and direct access to the graphical interface in 3D (306). The individual management of each event will be done exclusively with the graphic interface (306) as described later. 4224 events graphic section shows performed events, current month and pending events. You can also specify events by months and go to the history of consumption.

The (423) module of those authorized includes three sections: new authorized 4231, 4232 authorized and a list of authorized 4233. In the section of new authorized 4231 the restaurant has the ability to authorize access to the event to the users specified here. All their details are included. In the section of authorized 4232, once created, those authorized are allotted to the event that corresponds. In addition they are assigned a username and password to enter the system. Finally, in the authorized list section, those who have been authorized access by the restaurant, with a list of events by user. Only the authorized can view and manage those events for which they have been authorized by the restaurant.

A "ticket" system for the resolution of questions and incidents by the technical staff of the system will be enabled at the 424 support for professional users only (organizers and site) module. The life of a ticket will have its origin in the discharge by the user, the evaluation by the technical staff and finally the resolution. This system seeks to minimize the consumption of resources for the work of support and at the same time establish traceability on frequent consultations and resolutions with a view to subsequently adopt administrative or technical decisions accordingly.

In the organizers area of 403 the user profile is that of event planning professionals. The main functionality is the management of premises, customer and events. The interface is presented as text and graphic in three dimensions. It includes the same modules as that in restaurant area 402 with the organizer contact details as the only difference.

In the host area of 404 the user profile is the bride, groom, or both simultaneously. The main functionality is the monitoring of the development of the event and managing the guest list and their location at the tables. The interface is a graphical 406 and 408 mobile application as described below.

In the public area 405 the user profile are the visitors to the web application 34, as anonymous users. The main functionality is to know the project and its possibilities, such as access to areas of restaurants 401 and the 406 graphical interface area using username and password, as well as the option to download the mobile app 408 100 electronic portable device.

The graphical interface 406 is the heart of the system and which gives it its best features. The application will have a specific module to manage the distribution of rooms, resources and guests at each event. The interface will be fully graphic and will allow in a visual way, to organize resources and guests registered for each event. The interface will have to be attractive and at the same time intuitive and effective.

The access to this module will be from the registration of an event which will open a new window in the browser in which the graphic scenario and the related operations menu will be displayed.

This graphic interface will have two different versions, depending on the type of user who has access to them - according to the following relationship:
- Restaurants / Planners 4061
- Bride & Groom / Hosts 4062

All modules mentioned below and all of its elements: tables, guests, cutlery, etc will be sustained and synchronized with the same data base as the rest of the application. Therefore, any changes you make in the graphical environment will also have direct and immediate correspondence data from the rest of the application and vice versa.

The 4061 restaurants graphic interface will display in the upper part the information summarizing the event, previously completed by the restaurant in the event module. This information includes the name of the restaurant (4061 a), name of the room (4061 b), guests: displays the total number of guests and the number of guests placed in the room (4061 c) and the number of tables: displays the total number of tables and the closed/full tables in the room (4061 d). It also includes a screen (4061 e) in the center showing information of each step to help the user.

In the bottom left: room view options and downloads are shown (4061 f)
- Room view: In addition to the 3D view, the system allows you to see the scenario in 2d (overhead view).
- Downloads: Generates a downloadable snapshot of the distribution of the room in 2D, a list of guests for tables and the generation of video file (AVI, MOV, MPEG formats) with a virtual tour of the scenario in 3D.

In the virtual tour, as well as zenithal floor view of rooms, there is the possibility of making a virtual 3D tour among the tables and guests. For this it depends completely on graphics programming which will be based on the same data as the 2D environment. Finally, at the bottom right: displays options again, rooms and events (4061 g), this access has the following options:
- New room (shown in fig. 7A): this button activates the menu's personalization of the room (Fig. 7B). This menu provides all the necessary tools for restaurants to virtually build in a few minutes the room where the event will be held. To facilitate the re-creation of the space the info window acts as an assistant, since it shall be informing you of each step, and to overcome any doubt (4061 e).

Menu customization (Fig.7B) shows the space to define the room or rooms in which the event will take place. There can be one or more at a time and it will have to be able to manage the tables and resources used in each one of them from the same interface session. The list of properties assigned to each space will come in predefined lists and will be selectable by the user:
- Walls: Dimensions (height, width, length), colour texture.
- Floor: colour, texture.
- Doors and Windows: dimensions and finish.
- Lighting: Wall lamps, lamps, style, ambient light.
- The tables. List of tables allocated at each event. In addition to access to the list, with an action such as the double-click or other TBD, you can access the attributes and properties of each one of them. All will have a graphical representation to recognize it easily as well as information of the possible number of diners and the constant updating of the number of guests that have been positioned. To add a new table to the scenario you only have to click on it and drag and drop it in the right hand panel. The list of attributes for each table will be:
- Number. Assigned by the restaurant.
- Descriptive: Optional name, to facilitate their identification among the rest.
- Type: presidential, child, etc. (predefined models Gallery)
- No. of diners. (minimum and maximum)
- Household linen.
- Chairs.
- Type. Gallery of predefined models.
- Finish: Colour, material, texture.
- Household. Includes linen and cutlery. Ditto chairs.

To access rooms activate rooms menu (Fig. 7 c) so that shows the existing rooms and the events foreseen in each room. It includes event types and will show the products actively contracted by the customer: Standard, Deluxe, and Extra. By clicking on any of them, it will show the existing rooms and events within each. In the events in room you can view all events room by room or only by families of events: events in weddings, dinners, companies, communions, baptisms, anniversaries, or any other type of celebration. It will be very useful when a restaurant has many events and can collect the types of events and incidents internally.

Finally, room access represents each room and displays the following information: number of specified room, indicates the events closed of the total number of events in this room, the name of the room. If there is a star, it displays a warning informing the restaurant of any change of an event in this room. It also reports the number of events in the next 30 days.

The access to events activates the events menu. It displays the active events in each room (fig.7D). This menu is accessed from the previous screens so that with a double click the user enters to the event in the 3D environment. Each event displays the following information: days remaining until the celebration, the name of the hosts, the date and time of the event, the number of placed guests of the total and (fig. 7E.) total tables closed/filled. If an event appears with a star, it means that there have been changes within this event (fig.7F). If in addition it has a yellow coloured halo, it means that all the guests are placed and confirmed. Obviously, any other form of pointing out the options is obvious to an expert in the field, although this was considered to be visually easier for users to interpret.

At the bottom center of the graphical interface of restaurants (4061) is the menu items in room (fig. 8). This menu includes the following accesses:
- Menu of items in room (740) where the total number of circles (741) represents each of the tables to place the guests. If the user clicks on them, all the tables are displayed.
- If you click on a table it shows you:
   o The characteristics of each table 742 (features defined in the customizing menu already described) and the list of placed guests at each table (743), which allows you to delete, expand, and change the characteristics of the table. Also if you make a change to any feature of the table you can modify them on all tables directly. This access is very useful to create rooms or events from existing models.

In the center of the screen is displayed a box for the 3D scenario of the room, which is called scenario.

Figure 9 shows the screen with the graphics area of guests (4062) and at the top it shows the summarized information of the event, previously completed by the restaurant in the event module. It includes details of the graphic interface of restaurants: restaurant name, name of the room, date and time of the celebration, name of bride and groom or hosts, guests and tables. It also includes a screen in the center where the information of each step is shown, helping the user, in this case the bride and groom or hosts.

The tables operating in the area of the bride and groom and guests below:
- Invited (400): this button is shown with a plate. The functions of this are as follows:
   o The border of the plate will progressively colour-fill as the guests are confirmed.
   o The number that appears at the top indicates the number of placed guests, the number that appears at the bottom on the inside of the plate is the total number of expected guests. If we click on the latter we can modify the total number of guests, in the case of cancellations.
   o In the recreated space (central display) each guest is represented by a plate, when passing the mouse over each plate we can see the name of the guest and the individuals linked to this. In addition we can delete it, so just drag it to the floor. The plate will break and will disappear.
   ○ Click on the word Guests and it activates the guest menu.
   ○ Guests Menu: this menu includes options for: place, distributing and listing.
- Place (410) allows the placement of the guests through:
   ○ Registering Guests (411) automatically via the application developed exclusively for this function. This option activates the application, opens a screen where all phone contacts are recognized and permits the following options:
   o Select contacts, assign them as a type of guest (family groom, family bride, friends groom, friends bride, work companions, third parties,...), specify individuals linked to each guest and add them.
   ○ Some guests may be marked as "group head" so link them with other invited members of the same family unit. Ex: Women, children, etc. At the time of confirming the attendance of a guest "head", all those linked below will be also confirmed automatically. This does not prevent that each one of them can be removed or located separately.
   ○ Each contact will be named with the same name that is saved in the phone directory. In addition the system saves the phone number, to send a sms invitation, once they have been placed in a room. In turn, the guest may confirm their attendance at the event by sending a sms that will be instantly recognized by the system.
   ○ Depending on the type of guest, your plate will have a colour. Ex: If the guest is a relative of the bride, it appears as a pink plate. Linked guests appear in white colour.
- Add contact (412): manually each guest. To add a guest, just write a name and their phone number, assign a type of guest and drag it to the desired table.
   ○ For each added contact, you will be asked if you have linked people, to include them and add them. The linked are shown attached to the contact (see example in table 5).
   ○ The same as in import, the guests are displayed on a plate of one colour or other according to type (family groom, family bride, friends groom, friends bride, third parties,...).
   ○ Both options (Import and Add contact) are compatible.
- Distribute (420): performs an automatic distribution from the created contacts. The parameters of distribution will be by guest type. In addition the system will recognize vacant seats by alarms. The system will propose to the user a redistribution of guests, even when there are several empty seats and even the possible elimination of tables. The procedure will be by simple cassation between the (already specified) table type and the type of guests. The program will be filling tables for groups up to the maximum of diners per table. At the end it will always allow manual adjustment of any guest or table.
- Listing (430): displays the list of guests grouped according to their group assignment (family groom, family bride, friend groom, friend bride... etc). The list of guests, acceptances, declinations, and changes of location and group at the event can be manually managed.
- Tables (500): this button is shown with a plate. The functions of this are as follows:
   o The plate edges will colour-fill as the tables are confirmed.
   ○ The number that appears at the top indicates closed tables. The number that appears at the bottom on the inside of the plate indicates the total number of tables for the placement of guests. In the case of cancellations we go to this last link and modify the total number of tables. Regarding the placement of the guests, the interface provides systems to emphasize visually and to easily distinguish between complete and incomplete tables as well as guests who have already confirmed and those who have not.

At the bottom center is the tables in room menu (Fig.10) where the circles represent each of the tables for the placement of guests. If you click on them, the screen shows an illustrated plate with the tables and the placed guests. According to the characteristics of the plate indicated:
- The colour will be different according to the assigned group (for example, bride's family and groom's family)
- If the table is complete it will be shown with a highlighted border. Within the scenario it will be shown with an illuminated halo.
- In addition each table, with the information from the guests, will be shown in the restaurant area, and in turn will be saved in the administrative manager.
- The tables that have a red circle with a number in the middle indicate the number of unoccupied spaces at the table.

If we access a table in the scenario, above (fig. 10A) indicates the name of the table, assigned by the restaurant, and the names of the guests placed there. In the bottom left: room view and downloads options are shown (4061 f)
- Room view. In addition to the 3D view, the system allows you to see the scenario in 2D (overhead view).
- Downloads.
- Generates a downloadable snapshot of the distribution of the room in 2D.
- Generates a list of guests for tables.
- Virtual tour video. Generation of video file (AVI, MOV, MPEG formats) with a virtual tour of the scenario in 3D.

"Virtual tour": As well as a zenithal floor view of rooms, there is the possibility of making a virtual 3D tour among the tables and guests. So it depends entirely on the graphical programming and will be based on the same data as the 2D environment.

Support (407) area has the following characteristics:

### Profile of user: Support technicians.

### Main functionality:

Support technicians interface has a purely HTML component with all the components necessary for the management, monitoring and troubleshooting, and promptly they can use the graphic environment of the client to test and do field checks. This interface is text and graphic in 3D.

### Modules and functions:

- Customer file. It includes a directory of assigned clients, with access to contact details, contracted services and special events.
- Management of Tickets. Relationship and ticket history assigned with detailed information regarding traceability and state.

Application (8) for devices (100) electronic notebooks has the following characteristics:
Once the application is installed, the user will introduce their password to the system environment on the server. This key (name and password) will have been provided before by the restaurant. To connect, the application will display the basic data of the (wedding) event as the place and the date of celebration. The user can then browse their address book and make single or multiple selections of records.
Once selected 'records', use the menu option register guests, who connect again with the database of the application, and they are then registered automatically on the selected contact list as guests to the event. This procedure shall include a duplicate records filter.

The second main functionality of the application will be to send invitations by SMS. This may be in the same procedure of guests' registration and with a message of text with customizable content, from a message default model. The data that will be used on the agenda will be, at least, the name and the telephone number. In each connection, the application will synchronize the state of confirmation of the guests and will show some related indicative next to the name of the guest / contact.

## Claims

1. Interactive method for the management and coordination of guests at social, institutional and company events comprising the steps:
a. Guest registration;
b. Registration of attendees, these are the confirmed guests;
**characterized by the steps comprising:**
c. Automatic distribution of attendees in resources, while those resources are defined in a three-dimensional graphic shown to the user where:
a. The distribution is carried out according to the levels of closeness or affinity among the attendees; and
b. Once the automatic distribution is done it establishes that resources have not been occupied by another attendee.
d. Automatic reorganization of attendees with each new confirmation, according to the proximity or affinity between them.

2. Method according to claim 1 comprising the manual placement of one or more attendees.

3. Method according to claims 1 and 2 where invitations are sent via text message.

4. A device (100) electronic notebook, comprising:
one (126) touch screen;
one or more processors (106);
one memory (102); and
one or more programs (132 to 146), in which the (132-146) programs are stored in the memory (102) and configured to run using the processors (106); characterized because programs (132-146) include instructions for:
connect to a web server;
show the information contained on this web server;
access to an agenda of contacts stored in the memory (102) and make single or multiple selection of records in this agenda;
Register the uniquely selected contacts from the memory (102) on the web server;
send to each contact selected from the contact book a text message requesting confirmation; and
synchronize invited contacts confirmation status for each connection to the web server.

5. A server accessible via the web through a communications network comprising:
one or more processors;
one memory; and
one or more programs where such programs are configured and stored in a memory to run through the processors, characterized because the programs include instructions for:
providing a three-dimensional graphical representation of the space available for the event;
the automatic distribution of attendees in the resources, while those resources are defined in a three-dimensional graphic shown to the user where:
(a) the distribution is done on the basis of the levels of closeness / affinity among attendees; and
(b) once the automatic distribution has been carried out it establishes that
resources have not been occupied by another attendee; and
automatically rearranges the attendees with every new confirmation of attendance received according to proximity or affinity among the attendees.

6. Interactive system for the management and coordination of guests at social, institutional and company events comprising
a portable electronic device according to claim 4 (100); and
a central server accessible via web from said device (100) electronic notebook in accordance with claim 5.

7. A software product with instructions set up for execution by one or more processors that, when they are implemented by a device (100) electronic notebook according to claim 4, and a server according to claim 5, make the system of claim 6 carry out the procedure as per any of the claims 1 to 3.
